# EUROPÄISCHE PATENTANMELDUNG

(11) **EP 1 770 340 A2**
(43) Veröffentlichungstag der Anmeldung: **04.04.2007**
(21) Anmeldenummer: 06019967.6
(22) Anmeldetag: 25.09.2006
(51) Int. Cl.: F24J 2/54, F24J 2/38, H01L 31/042

(54) **Vorrichtung zur Aufnahme und Nachführung von Solarkollektormodulen**

(30) Priorität: 29.09.2005 DE 102005046874
(71) Anmelder: Lehmer, Claudia, 92463 Bruck/Opf. (DE); Mittermeier, Franz, 84574 Taufkirchen (DE)
(72) Erfinder: Lehmer, Helmut, 92436 Bruck/Opf. (DE); Mittermeier Franz, 84574 Taufkirchen (DE); Bauer, Josef, 92536 Pfreimd (DE); Dirscherl, Gerhard, 93194 Walderbach (DE); Fleischmann, Andreas, 92439 Bodenwöhr (DE); Lehmer, Claudia, 92436 Bruck/Opf. (DE)
(74) Vertreter: Glück, Martin

(57) **Zusammenfassung**

Die Erfindung betrifft eine Vorrichtung zur Aufnahme und Nachführung von Solarkollektormodulen bestehend aus zumindest einem flachen Korsolenmodul zur Aufnahme von Solarkolletormodulen, wobei das flache Konsolenmodul (3) über ein drehkranzförmiges Führungsmodul um die vertikale Mittelachse der Vorrichtung drehbar gelagert ist. Besonders vorteilhaft ist bei der erfindungsgemäßen Vorrichtung zumindest ein ebenfalls um die vertikale Mittelachse (L) drehbar gelagertes Halte- und Stützelement vorgesehen.

## Beschreibung

Die Erfindung betrifft eine Vorrichtung zur Aufnahme und Nachführung von Solarkallektormadulen, beispielsweise Photovoltaik- oder auch solarthermischen Modulen, mit einem flachen Konsolenelement zur Aufnahme der Solarkollektormodule, wobei das flache Konsolenmodul über ein drehkranzförmiges Führungsmodul um die vertikale Mittelachse der Vorrichtung drehbar gelagert ist.

Solarkollektormodule, insbesondere in Form von Photovoltaik- oder auch solarthermischen Modulen sind aus dem Stand der Technik hinlänglich bekannt. Derartige Module werden häufig auf Dächern oder Fassaden angeordnet. Problematisch hierbei ist die relativ geringe Energieausbeute, aufgrund der statischen Anbringung der Solarkollektormodule.

Um die optimale Stellung zur Sonne einnehmen zu können, ist es erforderlich, derartige Solarkollektormodule nach dem jeweiligen Sonnenstand nachzuführen. So kann beispielsweise durch eine geeignete Nachführung derartiger Solarkollektormodule nach dem Sonnenstand die Energieausbeute um mehr als 30% erhöht werden.

Hierzu ist aus der DE 103 43 374 A1 beispielsweise eine Sonnenstandsnachführungsvorrichtung für Solarkollektormodule bekannt, welche eine aus dreieckförmigen Grundgestellelementen bestehende Gestellkonsiruktion mit einer auf dieser aufgesetzten Konsole zur Aufnahme der Solarkaliektormodule aufweist und dessen Gestellkoristruktion auf einem Drehkranz drehbeweglich angeordnet ist. Die dreieckförmigen Grundgestellelemente sind senkrecht zum Drehkranz angeordnet, welche über Querstreben mit einem im Drehkranz geführten Drehkranzring fest verbunden sind. Die auf der Gestenllkonstruktion angeordnete Konsole ist somit um die senkrecht zur Bodenoberfläche verlaufende Mittelachse des Drehkranzes drehbar ausgebildet, d.h. die Solarkollektormodule können durch Drehen um die Mittelachse der Konstruktion dem Sonnenstand nachgeführt werden. Die Konsole ist ferner an der Gesteilkonstruktion schwenkbar angeordnet.

Ebenso ist aus der DE 697 07 418 T2 eine Vorrichtung zur Aufnahme und zum Nachführen von photovoltaischen Sonnenkollektormodulen mit einem pyramidenförmigen Aufbau bekannt, die eine Basis und zumindest drei weitere Pyramidenseiten aufweist, wobei lediglich eine einzige der Pyramidenseiten mit Solarkolletormodulen bestückt ist. Diese bildet die Sonnenkollektorebene der Vorrichtung aus, wobei die zwei weiteren Pyramidenseiten lediglich dazu dienen, die gesamte Vorrichtung windstabil auszugestalten. Zur Drehung der Pyramidenstruktur ist ein Nachsteuersystem vorgesehen, welches die Ausrichtung der die Sonnenkollektorebene bildenden Pyramidenseite der Vorrichtung durch Drehung um die vertikale Mittelachse der Vorrichtung ermöglicht.

Die in den beschriebenen Anordnungen vorgesehenen Solarkollektormodule sind kostenintensiv, so dass eine Wirtschaftlichkeit erst bei einer vorgegebenen Mindestanzahl von derartigen Solarkollektormodulen gegeben ist. Aufgrund der hohen Mindestanzahl und des dadurch entstehenden Eigengewichtes der Solarkollektormodule ist eine technisch aufwendige und kostenintensive Vorrichtung zur Aufnahme und Nachführung derartiger Solarkollektormodule erforderlich.

Aufgabe der vorliegenden Erfindung ist es, eine Vorrichtung zur Aufnahme und Nachführung von Solarkollektormodulen anzugeben, welche technisch einfach und kostengünstig herstellbar sowie schnell und flexibel montierbar ist. Die Aufgabe wird ausgehend vom Oberbegriff des Patentanspruches 1 durch dessen kennzeichnende Merkmale gelöst.

Der wesentliche Aspekt der erfindungsgemäßen Vorrichtung ist darin zu sehen, dass die Vorrichtung zur Aufnahme und Nachführung von Solarkollektormodulen neben der drehbaren Lagerung über ein drehkranzförmiges Führungselement zumindest mittels ein zusätzliches Halte- und Stützelement drehbar gelagert und darüber hinaus im Drehzentrum der Vorrichtung gestützt wird. Durch die zusätzliche drehbare Lagerung des flachen Konsolenmoduls im Bereich des Drehzentrums der Vorrichtung wird das Gewicht des flachen Konsolenmoduls und den auf diesem vorgesehen Solarkollektormodulen gleichmäßiger auf die gesamte Halte- bzw. Tragekonstruktion verteilt, wodurch die Anzahl der Solarkollektormodule deutlich erhöht werden kann, ohne zusätzliche Verstrebungselemente vorzusehen. Darüber hinaus ermöglicht das Vorsehen eines Halte- und Stützelementes eine einfachere Anpassung der Vorrichtung an die örtlichen Bodenneigungsverhältnisse.

In weiteren vorteilhaften Ausführungsformen der Erfindung ist das zusätzliche Halte- und Stützelement zylinderförmig, als Halte- und Stützmastelement oder als weiteres drehkranzförmiges Führungselement ausgebildet. Beispielsweise durch das erfindungsgemäße Vorsehen des Halte- und Stützmastelementes, an dem beispielsweise über Halteseileelemente das flache Konsolenmodul hängend befestigt ist, wird das Gewicht der gesamten Halte- bzw. Tragekonstruktion optimal aufgeteilt, und zwar auf das Halte- und Stützmastelement sowie das drehkranzförmige Führungselement.

In einer weiteren vorteilhaften Ausbildung der erfindungsgemäßen Vorrichtung sind die Solarkollektormodule mit dem flachen Konsolenmodul schwenkbar und/oder drehbar verbunden, wobei sämtliche Solarkollektormodule entlang zueinander parallel verlaufender Schwenk- und/oder Drehachsen angeordnet sind. Hierdurch wird zumindest eine weitere Nachführungsachse neben der um die Mittelachse der Vorrichtung realisiert, welche eine optimale Ausrichtung der Solarkollektormodule hinsichtlich des jeweils vorliegenden Sonnenstandes bietet.

Weitere vorteilhafte Ausgestaltungen der erfindungsgemäßen Vorrichtung sind den weiteren Patentansprüchen zu entnehmen.

Im Folgenden wird die Erfindung anhand von Zeichnungen an mehreren Ausführungsbeispielen beispielhaft erläutert. Es zeigen:
- Fig. 1: eine Seitenansicht der Vorrichtung zur Aufnahme und Nachführung von Sonnenkollektormodulen;

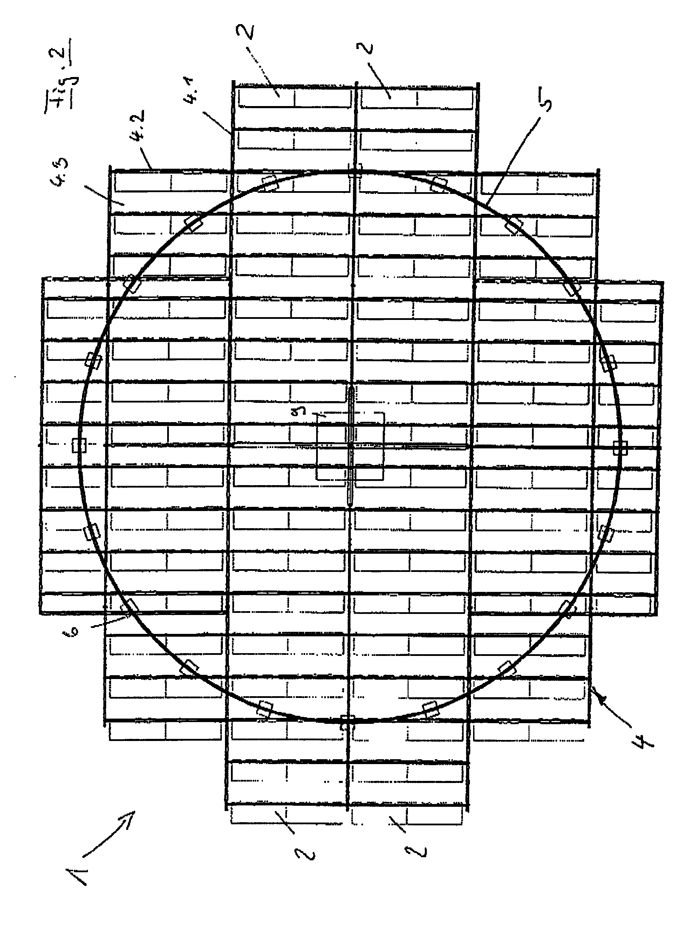

- Fig. 2: eine Draufsicht auf die Vorrichtung gemäß Fig. 1;
- Fig. 3: eine Seitenansicht einer alternativen Ausführungsform der erfindungsgemäßen Vorrichtung;
- Fig. 4: die Vorrichtung gemäß Fig. 3 in perspektivischer Darstellung;
- Fig. 5: eine Draufsicht auf die alternative Vorrichtung gemäß Figur 3;
- Fig. 6: eine Seitenansicht einer weiteren alternativen Ausführungsform der erfindungsgemäßen Vorrichtung;
- Fig. 7: in Ausschnittsdarstellung das Halte- und Stützelement der Vorrichtung gemäß Figur 1;
- Fig. 8: in Ausschnittsdarstellung die zur Befestigung der Solarkollektormodule an dem flachen Konsolenmodul vorgesehenen Befestigungselemente;
- Fig. 9: in Ausschnittsdarstellung und Seitenansicht den Randbereich der Vorrichtung gemäß Figur 3; und
- Fig. 10: in Ausschnittsdarstellung und Seitenansicht zwei auf dem flachen Konsolenmodul gemäß Figur 1 befestigte Solarkollektormodule.

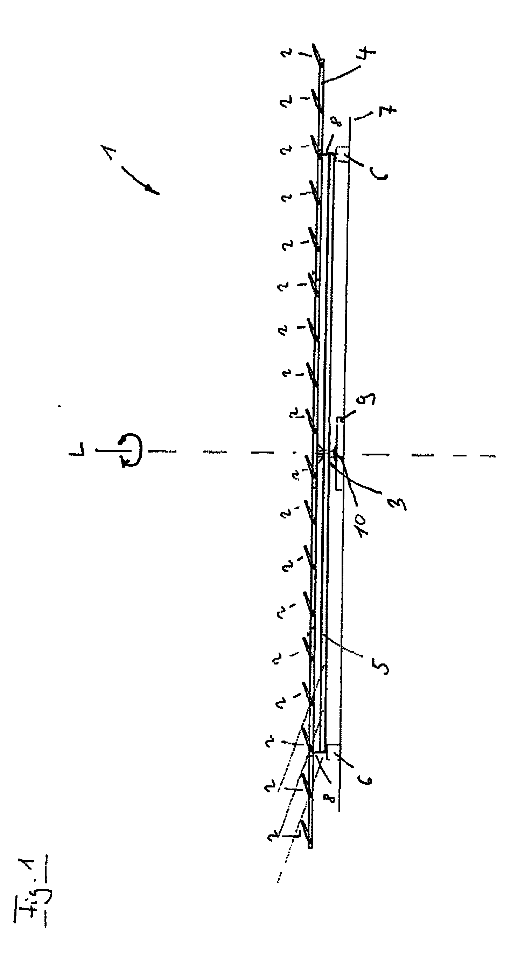

In Fig. 1 ist beispielhaft eine erste Ausführungsform der erfindungsgemäßen Vorrichtung 1 zur Aufnahme und Nachführung von Solarkollektormodulen 2 dargestellt, bestehend aus einem Halte- und Stützelement 3, einem flachen Konsolenmodul 4 sowie einem drehkranzförmigen Führungsmodul 5. Die Solarkolleklormodule 2 sind beispielsweise als Photovoltaik- oder auch solarthermischen Module ausgebildet, welche flache, vorzugsweise rechteckförmige Panelle bilden.

Das drehkranzförmige Führungsmodul 5 ist in einer bevorzugten Ausführungsform als Kreisringelement ausgebildet, welches auf mehreren entlang des sich ausbildenden Kreisringes angeordneten Bodenfundamenten 6 gelagert ist. Die Bodenfundamente 6 sind vorzugsweise auf der Bodenoberfläche 7 aufgesetzt bzw. zumindest teilweise im Boden 7 versenkt. Das drehkranzförmige Führungsmodul 5 bildet somit eine kreisringförmige Führungsschiene aus, auf der beispielsweise Rollen- oder Kufenelemente 8 gleitend führbar sind.

Das flache Konsolenmodul 4 ist aus einer Vielzahl von jeweils parallel zueinander angeordneter Querverstrebungselementen 4.1 und Längsverstrebungselementen 4.2 gebildet, d.h. modulartig aufgebaut. Die Quer- und Längsverstrebungselementen 4.1, 4.2 können entweder miteinander verschweißt oder verschraubt oder auf ähnliche Art fest oder lösbar verbunden sein und bilden im verbundenen Zustand eine ebene Gitterkonstruktion aus, die eine Vielzahl von Konsolenöffnungen 4.3 unterschiedlichster Abmessungen aufweist.

In einer bevorzugten Ausführungsform sind die Konsolenöffnungen 4.3 rechteckförmig ausgebildet und weisen die doppelte Breite eines Solarkollektormoduls 2 und eine zumindest der Höhe eines Solarkollektormoduls 2 entsprechende Höhe auf. Hierbei wird eine Konsolenöffnung 4.3 durch jeweils zwei gegenüberliegende Querverstrebungselemente 4.1 und Längsverstrebungselementen 4.2 gebildet. Die Quer- und Längsverstrebungselemente 4.1, 4.2 können aus mehreren in Serie angeordneten oder teilweise überlappenden einzelnen Verstrebungselementen gebildet sein, welche entweder unmittelbar miteinander verschraubt oder über Verbindungselemente miteinander verbunden sind. Vorzugsweise sind die Quer- und Längsverstrebungselemente 4.1, 4.2 aus Metall oder kostengünstigen Metalllegierungen oder einer Kombination aus beiden hergestellt. Zur Verstärkung einzelner besonders belasteter Abschnitte bzw. Bereiche des flachen Konsolenmoduls 4 können zusätzliche Verstärkungs- und/oder Verstrebungselemente vorgesehen sein, wodurch die Steifigkeit der Gitterkonstruktion deutlich erhöht wird. Auch ist eine Mehrfachanordnung von Quer- und Längsverstrebungselementen 4.1, 4.2, beispielsweise im Bereich des Drehzentrums der Vorrichtung 1 möglich.

Die Querverstrebungselemente 4.1 und/oder Längsverstrebungselemente 4.2 des flachen Konsolenmoduls 4 sind über die zuvor beschriebenen Rollen- oder Kufenelemente 8 mit dem als Kreisringelement ausgebildeten drehkranzförmigen Führungsmodul 5 verbunden, wodurch eine Drehung des flachen Konsolenmoduls 4 vorzugsweise um die Mittelachse L der Vorrichtung in oder gegen den Uhrzeigersinn möglich wird. Hierzu sind die Rollen- oder Kufenelemente 8 senkrecht oberhalb des drehkranzförmigen Führungsmoduls 5 in gleichmäßigen Abständen angeordnet. Diese können entweder mit den Querverstrebungselementen 4.1 und/oder Längsverstrebungselementen 4.2 verschweißt oder in diese modulartig eingesetzt werden.

Alternativ können die Rollen- oder Kufenelemente 8 unmittelbar auf den Bodenfundamenten 6 angeordnet sein und das als Kreisringelement ausgebildete drehkranzförmige Führungsmodul 5 starr mit dem flachen Konsolenmodul 4 bzw. dessen Querverstrebungselemente 4.1 und/oder Längsverstrebungselemente 4.2 verbunden sein.

Zur weiteren drehbaren Ausbildung der Vorrichtung 1 sowie zur zentralen Stützung des durch die flache Konsolenmodul 4 und den darauf angeordneten Solarkollektormodulen 2 erzeugten Eigengewichts ist erfindungsgemäß im Bereich des Drehzentrums, beispielsweise der Mittelachse bzw. Drehachse L das Halte- und Stützelement 3 vorgesehen, welches vorzugsweise als zylinderförmiges Halte- und Stützelement 3 ausgebildet ist, dessen eine Stirnseite drehbar mit einem Stützfundament 9 und dessen andere Stirnseite mit dem flachen Konsolenmodul 4 bzw. dem Kreuzungspunkt zumindest eines Querverstrebungselementes 4.1 und zumindest eines Längsverstrebungselementes 4.2 starr verbunden ist.

In einer alternativen Ausführungsform kann das Halte- und Stützelement 3 jedoch beispielsweise auch als weiteres drehkranzförmiges Führungselement ausgebildet sein, dessen Mittel- bzw. Drehachse mit der Drehachse L der Vorrichtung 1 übereinstimmt. Hierbei sind unterschiedlichste Ausführungsformen möglich, die eine zumindest teilweise Aufnahme des Eigengewichts des flachen Konsolenmoduls 4 sowie der darauf montierten Solarkollektormodulen 2 im Bereich des Drehzentrums der Vorrichtung 1 gewährleisten.

Die Drehachse des Halte- und Stützelementes 3 stimmt somit in jeder Ausführungsform mit der Drehachse L der Vorrichtung 1 überein. Zur drehbaren Verbindung der einen Stirnseite des zylinderförmigen Halte- und Stützelementes 3 ist beispielsweise ein flaches Drehaugenelement 10 vorgesehen, welches zwischen dem Stützfundament 9 und der Stirnseite des Halte- und Stützelementes 3 angeordnet ist, wobei alternativ zum flachen Drehaugenelement 10 ebenfalls Rollen-, Kufen- oder Schienenelemente vorgesehen werden können. Die Drehachse des flachen Drehaugenelementes 10 und die Längsachse L des Halte- und Stützelementes 3 stimmen überein. Das Stützfundament 9 wird vorzugsweise in einer Tiefe von 3 - 5 m unter der Bodenoberfläche 7 verankert.

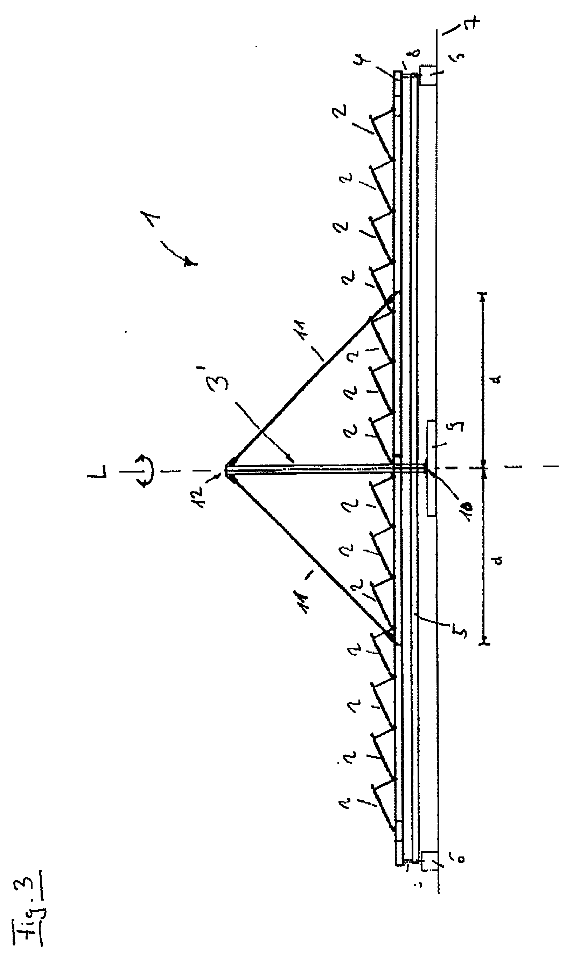

In einer weiteren alternativen Ausführungsform der erfindungsgemäßen Vorrichtung 1 gemäß Figur 3 weist das Halte- und Stützelement 3 ein mehrfaches der in Figur 1 dargestellten Länge auf, tritt durch eine Öffnung des flachen Konsolenmoduls 4 hindurch und steht somit von der durch das flache Konsolenelement 4 verlaufenden Ebene, vorzugsweise senkrecht nach oben weg. Hierdurch wird ein Halte- bzw. Stützmastelement 3' ausgebildet, das ebenfalls mit dem flachen Konsolenmodul 4 fest und über beispielsweise das Drehaugenelement 10 mit den Stützfundament 9 drehbar verbunden.

Darüber hinaus ist das zur Aufnahme der Solarkollektormodule 2 vorgesehene flache Konsolenmodul 4 mittels zumindest zweier Halteseilelemente 8 mit dem Halte- bzw. Stützmastelement 3' verbunden, und zwar derart, dass das Gewicht des die Solarkollektormodule 2 tragenden flachen Konsotenetementes 4 größtenteils über die beiden Halteseilelemente 8 auf das Halte- bzw. Stützmastelement 3' übertragen wird. Hierzu ist das eine Ende eines Halteseilelementes 8 jeweils mit dem dem Stützfundament 9 gegenüberliegenden Mastende 12 und mit der das flache Konsolenelementes 4 bildenden und aus den Querverstrebungselementen 4.1 und den Längsverstrebungselementen 4.2 aufgebauten Tragkonstruktion verbunden. Die beiden Verbindungsstellen mit dem flachen Konsolenelement 4 sind vorzugsweise im selben Abstand d vom Halte- bzw. Stützmastelement 3' bzw. zur Drehachse L angeordnet. Die Halteseilelemente 8 bilden zusammen mit dem Halte- bzw. Stützmastelement 3' eine Haltespinne aus, mittels der die vorzugsweise aus den Querverstrebungselementen 4.1 und Längsverstrebungselementen 4.2 aufgebaute Tragkonstruktion gestützt wird. In einer bevorzugten Ausführungsform sind die Halteseilelemente 8 Transparent ausgebildet, um hierdurch eine Abschattung der Solarkollektormodule zu vermeiden. Darüber hinaus können anstelle einiger weniger Halteseilelemente 8 eine Vielzahl von äußerst dünnen Stahldrähten vorgesehen sein, die ebenfalls eine Reduzierung des Abschattungsbcreiches ermöglichen.

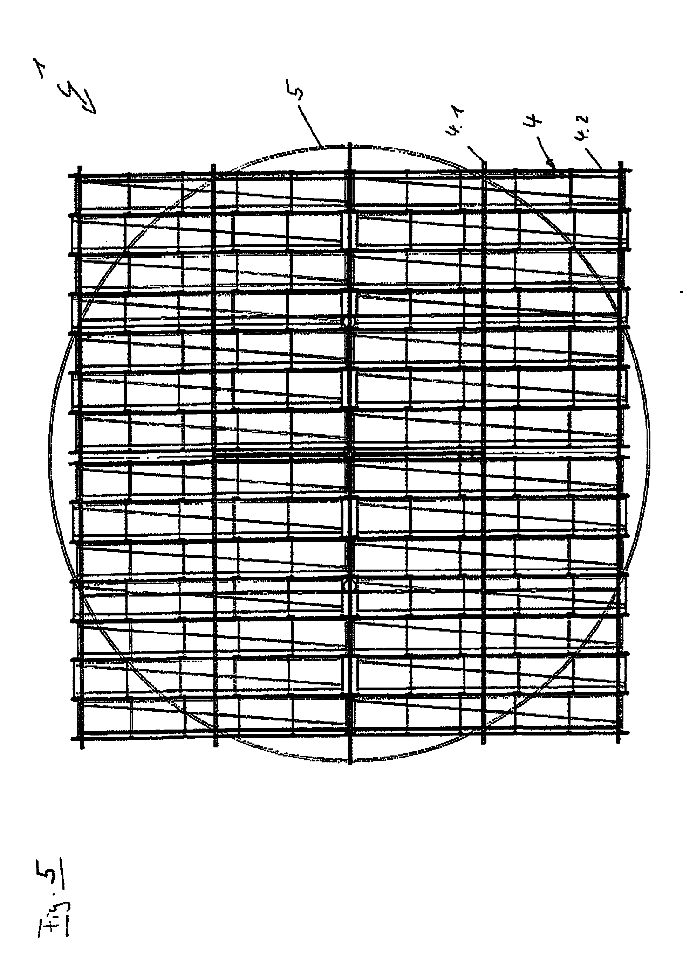

In einer weiteren alternativen Ausführungsform der Solarkollektorhalte- und Solarkollektornachführungsvorrichtung 1 gemäß der Figur 6 ist das flache Konsolenmodul 4 gegenüber der durch das drehkranzförmige Führungselement 5 verlaufenden Ebene geneigt angeordnet. Die durch das flache Konsolenmodul 4 verlaufende Ebene schließt hierbei beispielsweise mit der horizontalen Ebene einen Winkel ω zwischen 5 - 45° ein, wobei hierzu das flache Konsolenmodul 4 über eine aus mehreren parallel zur Drehachse L angeordneten Vertikalverstrebungselementen 13.1 sowie aus weiteren Quer- und/oder Längsverstrebungselementen 13.2 gebildete Unterkonstruktion 13 aufweist.

Ferner sind in den Randbereichen der Unterkonstruktion die Rollen- und/oder Kufenelemente 8 vorgesehen, die mit dem als Kreisringelement ausgebildeten drehkranzförmigen Führungsmodul 5 beweglich verbunden sind. Die Längserstreckung der beiden Halteseilelemente 11' sowie deren Befestigungsabstände d1, d2 vom Halte- und Stützmastelement 3' sind an die Neigung des flachen Konsolenmodules 4 angepaßt, und zwar derart, dass eine nahezu gleichmäßige Übertragung des durch das flache Konsolenmodule 4 nebst Unterkonstruktion erzeugten Gewichtes auf den Halte- und Stützmastelement 3' gewährleisten ist.

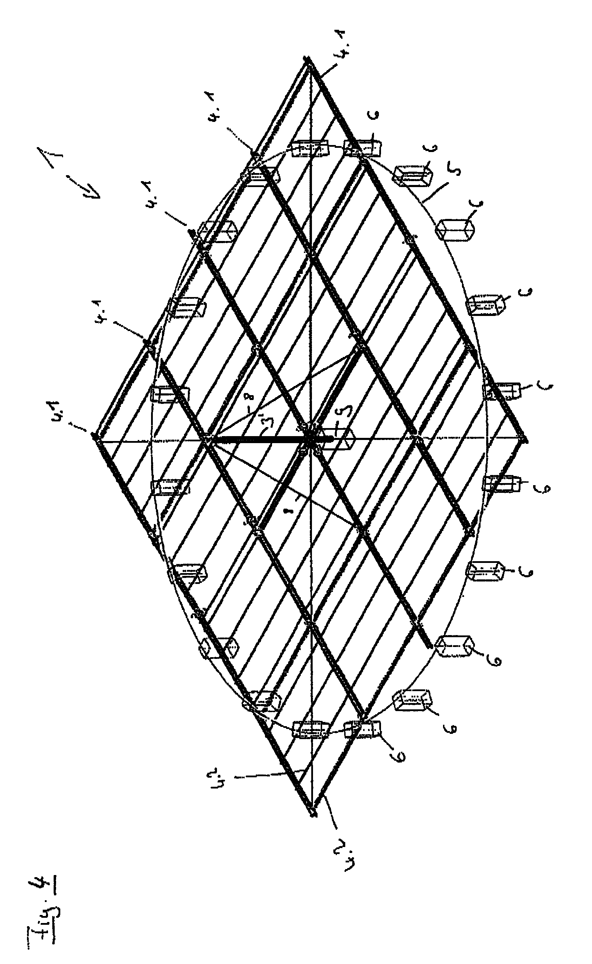

In Fig. 4 ist beispielhaft in einer perspektivischen Darstellung eine Draufsicht auf die alternative Ausführung der Vorrichtung 1 gemäß Figur 3 mit dem Halte- und Stützmastelement 3' dargestellt. An dem dargestellten Halte- und Stützmastelement 3' ist mittels vier Halteseilelementen 8 das flache Konsolenmodul 4 bzw. dessen Quer-und/oder Längsverstrebungselemente 4.1, 4.2 hängend befestigt. Bei dem in Fig. 4 dargestellten Ausführungsbeispiel ist lediglich das flache Konsolenmodul 4 ohne den darauf montierten Solarkollektormodulen 2 dargestellt.

In Fig. 5 ist beispielhaft eine Draufsicht auf eine alternative Ausführungsform der Vorrichtung 1 zum Aufnehmen und Nachführen von Solarkollektormodulen 2 dargestellt, die zur Versteifung der Unterkonstruktion 13 die beiden gegenüberliegenden Ecken der Konsolenöffnungen 4.3 miteinander verbindende Strebenelemente aufweist.

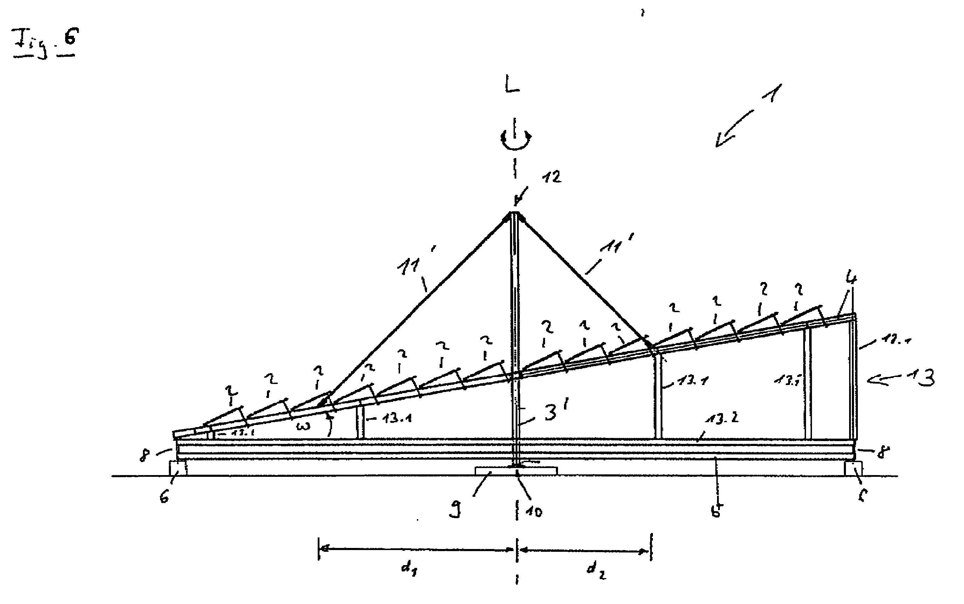

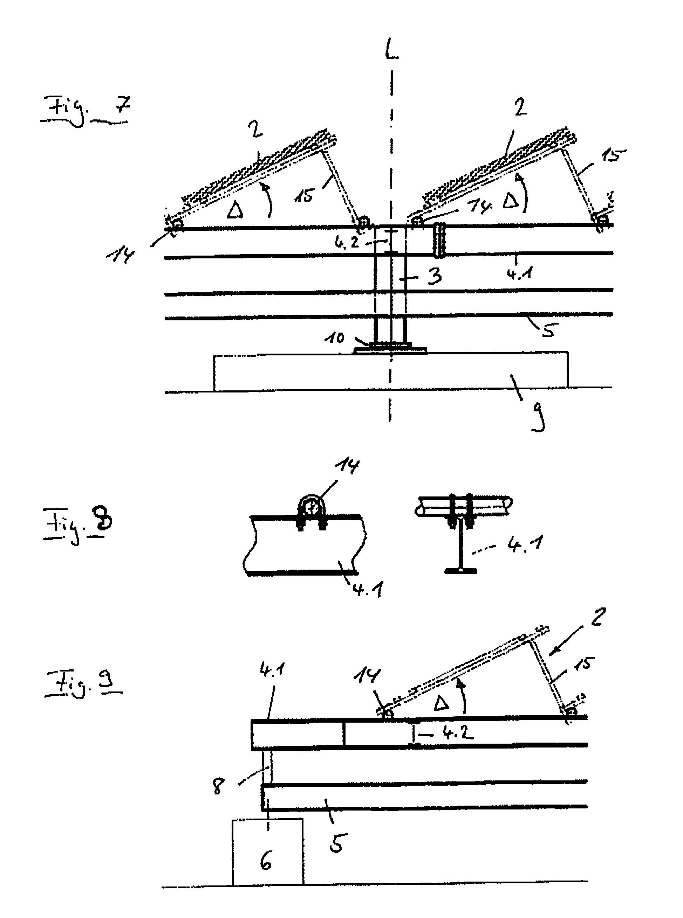

Zur Befestigung der Solarkollektormodule 2 innerhalb der Korasolenöffnungen 4.3 bzw. auf dem flachen Konsolenmodul 4 sind unterschiedliche in den Figuren 7-10 dargestellte Befestigungselemente vorgesehen, wobei die Solarkollektormodule 2 vorzugsweise in parallel zueinander verlaufenden Reihen angeordnet sind und hierbei jeweils mit zumindest einem Quer- und/oder Längsverestrebungselement 4.1, 4.2 in Verbindung stehen.

Vorzugsweise weisen von den Solarkollektormodulen 2 gebildeten Reihen einen Abstand auf, welcher in etwa der Breite eines Solarkollektormoduls 2 entspricht, um hierdurch eine gegenseitige Abschattung der Solarkollektormodule 2 zu vermeiden. Natürlich sind unterschiedliche Formen der Anordnung, beispielsweise auch in Form von einzelnen Solarkollektormodulgruppen, möglich, die nicht explizit in den vorliegenden Figuren dargestellt sind, jedoch im Rahmen der Erfindung liegen.

So können beispielsweise vier oder mehrere Solarkollektormodulgruppen gebildet werden, die in einzelnen Abschnitten des flachen Konsolenmoduls 4 angeordnet werden. Vorzugsweise werden die Solarkollektormodulgruppen derart angeordnet, dass der durch das Halte- und Stützmastelement 3' erzeugte Schatten im nach dem Sonnenstand nachgeführten Betriebszustand jeweils zwischen zwei Solarkollektormodulgrtsppen entsteht und keinesfalls die Solarkollektormodule beschattet, wodurch die die Funktionsfähigkeit der gesamten Solarkollektormodule stark beeinträchtigt wäre.

In einer bevorzugten Ausführungsform sind die Solarmodule einzeln oder in Gruppen schwenkbar und/oder drehbar auf dem flachen Konsolenmodul 4 angeordnet. Im Falle der schwenkbaren Ausbildung ist der Winkel Δ zwischen der durch das flache Konsolenmodul 4 aufgespannten Ebene und der durch die Solarkollektormodule aufgespannten Ebene entweder fest einstellbar oder variabel, beispielsweise automatisiert, verstellbar.

Die variable Einstellung kann beispielsweise manuell oder automatisiert mittels ein oder mehrerer Motoreinheiten erfolgen. Die Motoreinheiten können beispielsweise die Schwenkachse 14 eines oder mehrerer Solarkollektormodule 2 direkt oder indirekt antreiben. In einer alternativen Ausführungsform können die Motoreinheiten als Spindelantriebe oder als hydraulische Antriebseinheiten ausgebildet sein, die über beispielsweise ein Steuerelement 15 den gegenüber der Schwenkachse 14 liegenden Randbereich eines Solarkollektormoduls 2 anheben bzw. absenken.

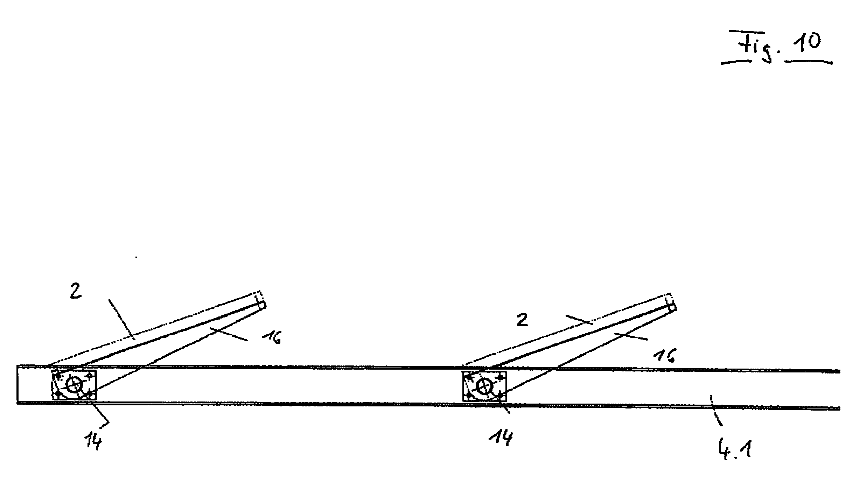

In einer besonders bevorzugten Ausführungsform gemäß Fig. 10 sind die Solarkollektormodule mittels zumindest zweier vorzugsweise drehbar gelagerter Kantwinkelelemente 16 an der Drehachse 14 befestigt, dessen Enden in zumindest zwei parallel zueinander verlaufenden Querverbindungselementen 4.1 drehbar gelagert sind, und zwar derart, dass die Drehachse 14 der Solarkollektormodule 2 beispielsweise senkrecht zu den daran befestigten Kantwinkelelementen 16 und in einer Ebene parallel zur dem durch das flache Konsolenmodul 4 aufgespannten Ebene verläuft.

Zusätzlich kann zur Steuerung der Vorrichtung 1, d.h. der Ausrichtung der Solarkollektormodule 2 nach dem aktuellen Sonnenstand, eine Regel- und/oder Steuereinheit vorgesehen sein, welche über eine Sonnenstandsmessvorrichtung den aktuellen Sonnenstand ermittelt und ausgehend von dem Ermittlungsergebnis Steuersignale zur Ansteuerung der Motoreneinheiten erzeugt. Mittels der erzeugten Steuersignale werden die Motoreinheiten zur Drehung der Vorrichtung 1 um die Drehachse L sowie zur Drehung der Solarkolletormodulen 2 um die Schwenkachse 14 entsprechend angesteuert. Vorteilhaft können unterschiedliche Regel- und/oder Steuerprogramme vorgesehen werden, welche eine weitere optimierte Nachführung der Solarkollektormodule 2nach dem jeweiligen Sonnenstand ermöglichen.

Die Erfindung wurde voranstehend an einem Ausführungsbeispiel erläutert. Es versteht sich, dass zahlreiche Änderungen sowie Abwandlungen möglich sind, ohne dass dadurch der der Erfindung zugrunde liegende Erfindungsgedanke verlassen wird.

### Bezugszeichenliste

- 1: Vorrichtung
- 2: Solarkollektormodule
- 3: Halte- und Stützelement
- 3': Haltemast
- 4: flaches Konsolenmodul
- 4.1: Querverstrebungselement
- 4.2: Längsverstrebungselement
- 5: drehkranzförmiges Führungselement
- 6: Bodenfundamente
- 7: Bodenoberfläche
- 8: Rollen- oder Kufenelement
- 9: Stützfundament
- 10: Drehaugenelement
- 11: Halteseiletemente
- 12: Mastende
- 13: Unterkonstruktion
- 13.1: Vertikalverstrebungselemente
- 13.2: Querverstrebungselement
- 14: Schwenkachse
- 15: Steuerelement
- 16: Kantwinkelelemente
- L: Drehachse
- d: Befestigungsabstand
- d1: erster Befestigungsabstand
- d2: zweiter Befestigungsabstand
- ω: Winkel
- Δ: Winkel

## Patentansprüche

1. Vorrichtung zur Aufnahme und Nachführung von Solarkollektormodulen (2) bestehend aus zumindest einem flachen Konsolenmodul (3) zur Aufnahme von Solarkolletormodulen (2), wobei das flache Konsolenmodul (3) über ein drehkranzförmiges Führungsmodul (5) um die vertikale Mittelachse (L) der Vorrichtung (1) drehbar gelagert ist, **dadurch gekennzeichnet, dass** zumindest ein ebenfalls um die vertikale Mittelachse (L) drehbar gelagertes Halte- und Stützelement (3, 3') vorgesehen ist.

2. Vorrichtung nach Anspruch 1, **dadurch gekennzeichnet, dass** das zumindest eine Halte- und Stützelement (3, 4') im Bereich der vertikalen Mittelachse (L) der Vorrichtung (1) angeordnet ist.

3. Vorrichtung nach Anspruch 1 oder 2, **dadurch gekennzeichnet, dass** das zumindest eine Halte- und Stützelement (3) zylinderförmig ausgebildet ist und zwischen einem Stützfundament (9) und dem flachen Konsolenmodul (3) drehbar angeordnet ist.

4. Vorrichtung nach Anspruch 1 oder 2, **dadurch gekennzeichnet, dass** das zumindest eine Halte- und Stützelement (3) als weiteres drehkranzförmiges Führungsmodul ausgebildet ist.

5. Vorrichtung nach Anspruch 1 oder 2, **dadurch gekennzeichnet, dass** das zumindest eine Halte- und Stützelement als Halte- und Stützmastelement (3') ausgebildet ist, an dem das flache Konsolenmodul (3) hängend befestigt ist.

6. Vorrichtung nach Anspruch 1 oder 2, **dadurch gekennzeichnet, dass** das flache Konsolenmodul (4) mehrere Querverstrebungselemente (4.1) und mehrere Längsverstrebungselemente (4.2) aufweist, wobei zumindest zwei Querverstrebungselemente (4.1) und/oder Längsverstrebungselemente (4.2) jeweils parallel und/oder in Serie und/oder teilweise überlappend angeordnet sind.

7. Vorrichtung nach Anspruch 6, **dadurch gekennzeichnet, dass** die Querverstrebungselemente (4.1) und die Längsverstrebungselemente (4.2) jeweils senkrecht zueinander angeordnet sind und/oder dass die Querverstrebungselemente (4.1) und die Längsverstrebungselemente (4.2) eine Gitterkonstruktion ausbilden, die mehrere Konsolenöffnungen (4.3) zur Aufnahme von jeweils zumindest eines Solarkollektormodules (2) aufweisen.

8. Vorrichtung nach einem der Ansprüche 1 bis 8, **dadurch gekennzeichnet, dass** das drehkranzförmige Führungsmodul (5) einen Kreisring ausbildet, der insbesondere auf Bodenfundamenten (6) gelagert ist.

9. Vorrichtung nach Anspruch 8, **dadurch gekennzeichnet, dass** das drehkranzförmige Führungsmodul (5) über Rollen- oder Kufenelemente (8) beweglich mit den Bodenfundamenten (6) oder dem flachen Konsolenmodul (3) verbunden ist.

10. Vorrichtung nach Anspruch 9, **dadurch gekennzeichnet, dass** das flache Konsolenmodul (3) mit dem drehkranzförmigen Führungsmodul (5) fest oder über Rollen- oder Kufenelemente (8) beweglich verbunden ist und/oder dass das flache Konsolenmodul (3) gegenüber der durch das drehkranzförmige Führungsmodul (5) aufgespannten Ebene geneigt angeordnet ist.

11. Vorrichtung nach einem der Ansprüche 1 bis 10, **dadurch gekennzeichnet, dass** die Solarkollektormodule (2) schwenkbar um eine Schwenkachse (14) mit dem flachen Konsolenmodul (3) verbunden sind.

12. Vorrichtung nach Anspruch 11, **dadurch gekennzeichnet, dass** mehrere Motoreneinheiten zur Drehung der Vorrichtung um die vertikale Mittelachse (L) der Vorrichtung (1) und/oder zum Schwenken der Solarkollektormodule um die Schwenkachse (14) vorgesehen sind, wobei eine Steuer- und Regeleinheit zur Ansteuerung der Motoreinheiten mittels Steuersignale vorgesehen ist.
